(19) Europäisches Patentamt
European Patent Office
Office européen des brevets

(11) **EP 2 733 470 A2**

(12) **EUROPEAN PATENT APPLICATION**

(43) Date of publication:
**21.05.2014 Bulletin 2014/21**

(51) Int Cl.:
***G01D 5/347*** *(2006.01)*

(21) Application number: **13193451.5**

(22) Date of filing: **19.11.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.11.2012 JP 2012253309**

(71) Applicant: **CANON KABUSHIKI KAISHA
Ohta-ku
Tokyo 146-8501 (JP)**

(72) Inventor: **Ito, Takafumi
Ohta-ku, Tokyo (JP)**

(74) Representative: **Garner, Jonathan Charles
Stapleton
Canon Europe Ltd
European Patent Department
3 The Square
Stockley Park
Uxbridge, Middlesex UB11 1ET (GB)**

(54) **Optical encoder**

(57)     An optical encoder includes light emitting means (10), a scale (30) that is irradiated with light from the light emitting means (10); a photo-detector (40) that receives the light from the scale (30) and that obtains an output signal; computing means (62) arranged to compute a position or a rotational angle of an object to be measured on the basis of the output signal; and storage time (exposure time) controlling means (65) arranged to control a storage time (exposure time) of the photo-detector (40) on the basis of the output signal of the photo-detector (40).

# FIG. 2

EP 2 733 470 A2

**Description**

BACKGROUND OF THE INVENTION

Field of the Invention

The present invention relates to an optical encoder that measures the position or the rotational angle of an object to be measured.

Description of the Related Art

As optical encoders that measure the position or the rotational angle of an object to be measured, optical encoders that compute the position or the rotational angle of an object to be measured on the basis of a waveform obtained by receiving light from a scale using light receiving means are provided.

In an optical encoder, when an object to be measured moves or rotates at a high speed, the contrast of an obtained signal waveform is reduced. When the contrast is reduced, a deterioration in measurement precision or a measurement error may occur.

According to Japanese Patent Laid-Open No. 2002-303538, in order to suppress a reduction in the contrast of a signal waveform when a rotary encoder rotates at a high speed, the rotary encoder emits pulsed light that is sufficiently shorter in terms of time than a shift pulse that moves an electric charge towards a transfer gate of light receiving means.

In Japanese Patent Laid-Open No. 2002-303538, the rotary encoder emits short pulsed light at all times at both high and low speeds. In this case, when the rotary encoder emits short pulsed light at a low speed, the amplitude of a signal waveform is reduced.

In recent years, there has been an increasing demand for precision in encoder measurements. As a result, there is a demand for further increasing contrast and improving a signal-to-noise (S/N) ratio. The method that is discussed in Japanese Patent Laid-Open No. 2002-303538 is capable of increasing contrast. However, in this method, since the amplitude is reduced at low speed, the S/N ratio at low speed is sacrificed, as a result of which measurement precision is deteriorated.

SUMMARY OF THE INVENTION

The invention of the application concerned is carried out in view of the above-described points and provides an optical encoder that is capable of increasing measurement precision at both high and low speeds.

The present invention in its aspect provides an optical encoder as specified in claims 1 to 10. In the application concerned, the terms "position" and "rotational angle" not only refer to "absolute position" and "absolute angle", respectively, but also refer to "relative position" (displacement amount) and "relative angle" (rotation amount), respectively.

Further features of the present invention will become apparent from the following description of exemplary embodiments with reference to the attached drawings.

BRIEF DESCRIPTION OF THE DRAWINGS

Fig. 1 illustrates a structure of an optical encoder according to the present invention.
Fig. 2 illustrates a structure of a controller according to a first embodiment.
Fig. 3 illustrates output signals of a photo-detector.
Fig. 4 shows the relationship between the speed of an object to be measured and the contrast value of output signals of the photo-detector.
Fig. 5 shows the relationship between the speed of an object to be measured and the amplitude of output signals of the photo-detector.
Fig. 6 illustrates a structure of a controller according to a second embodiment.
Fig. 7 illustrates a structure of a controller according to a third embodiment.
Fig. 8 illustrates a structure of a controller according to a fourth embodiment.

DESCRIPTION OF THE EMBODIMENTS

First Embodiment

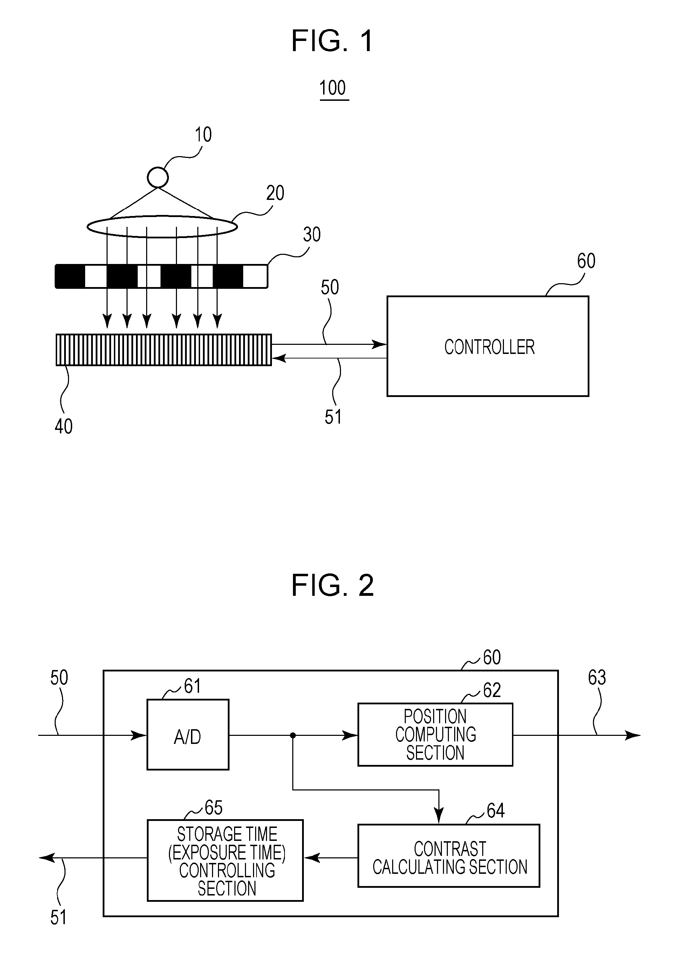

Fig. 1 is a schematic view of an optical encoder 100 according to a first embodiment of the present invention. In the first embodiment, a linear encoder that measures the position of an object to be measured is described. However, the present invention is applicable to a rotary encoder that measures the rotational angle of an object to be measured. In addition, although, in the first embodiment, an incremental encoder is described, the present invention is also applicable to an absolute encoder.

The encoder 100 includes a light emitting diode (light emitting means) 10, a collimator lens 20, a scale 30, a photo-detector 40, and a controller (controlling means) 60. Light emitted from the light emitting diode 10 is made parallel by the collimator lens (collimating means) 20 and illuminates the scale 30 having a structure (pattern) including light transmitting portions and light shielding portions. Then, the photo-detector 40 receives the light from the scale 30 (pattern), so that an output signal is obtained.

Instead of a light emitting diode, other light emitting means, such as a laser, may be used. Instead of the collimator lens 20, other collimating means may be used. Alternatively, a structure that does not use collimating means may be used, in which case diffused light is used.

The scale 30 is disposed between the collimator lens 20 and the photo-detector 40, and is movable in the direction of arrangement of the pattern (left-right direction in Fig. 1). In the embodiment, the scale 30 is an object to be measured. The light transmitting portions and light shielding portions of the scale 30 are alternately formed at equal pitches. Fig. 1 schematically illustrates the light transmitting portions in white and the light shielding portions in black. The scale 30 may also include semi-transmitting portions in addition to the light transmitting portions and the light shielding portions. Instead of transmitting light, light may be reflected. When light is reflected, the photo-detector 40 is disposed on the same side of the scale 30 as the light emitting diode.

As the photo-detector 40, for example, a complementary metal oxide semiconductor (CMOS) sensor or a charge coupled device (CCD) sensor is used. Although, in the embodiment, the photo-detector 40 is formed by disposing side by side a plurality of light receiving elements in the direction of arrangement of the pattern, a single light receiving element may also be used. The photo-detector 40 converts light that it has received into an electrical signal waveform. The obtained signal waveform (output signal) is transmitted to a controller 60 via a cable (transmitting means).

Using Fig. 2, the structure and function of the controller 60 are described. The controller 60 processes data concerning the encoder 100 and controls the operation of the encoder 100. As the controller 60, for example, an integrated circuit, such as a field programmable gate array (FPGA), may be used, with a memory (storage means) being included therein. The structure of the controller 60 is not limited to such a structure, and may be realized using hardware or software.

An analog-to-digital (A/D) converter 61 converts the signal waveform transmitted via the cable 50 into a digital signal. The signal waveform converted into a digital signal is input into a position computing section 62 (computing means). The position computing section 62 computes the position of the scale 30 on the basis of the input signal waveform. A signal related to the computed position is output to the outside of the controller 60 via the cable 63.

The signal waveform converted into a digital signal is also input into a contrast calculating section 64 (contrast calculating means). The contrast calculating section 64 calculates a contrast value of the input signal waveform on the basis of the following Numerical Expression (1) :

$$\text{contrast value} = (\text{maximum value} - \text{minimum value})/(\text{maximum value} + \text{minimum value}) \quad \dots (1)$$

The calculated contrast value is input into a storage time (exposure time) controlling section 65 (storage time (exposure time) controlling means). The storage time (exposure time) controlling section 65 compares the input contrast value with a threshold value, and outputs a storage time (exposure time) control signal according to a result of the comparison via a cable 51. When the contrast value is smaller than the threshold value, the storage time (exposure time) controlling section 65 outputs the storage time (exposure time) control signal so that the storage time (exposure time) of the photo-detector 40 is reduced by only a predetermined time. The threshold value and the predetermined time are previously stored (set) in the memory. The storage time (exposure time) control signal is, for example, a pulsed signal having a period. By changing the width of the pulsed signal, the storage time (exposure time) of the photo-detector 40 is controlled.

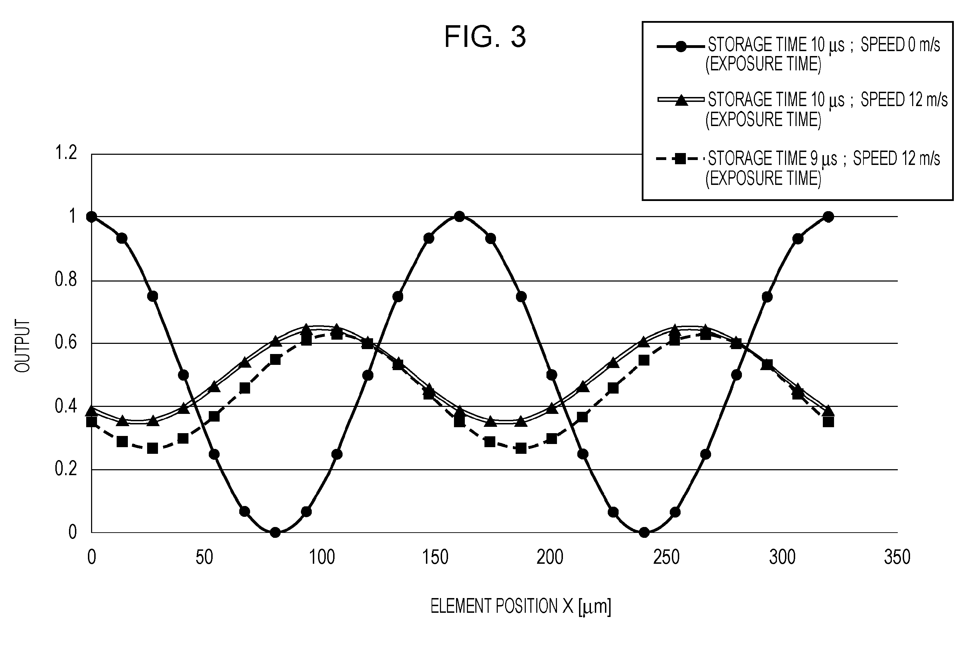

Fig. 3 illustrates signal waveforms that are obtained by the controller 60. The horizontal axis represents the position of each element in the photo-detector 40 that is plotted. The vertical axis represents the output (light quantity) of each light receiving element. In each signal waveform, the light quantity becomes maximum at positions opposing the light transmitting portions and becomes minimum at positions opposing the light shielding portions. Each signal waveform is periodic like a sinusoidal wave. In the first embodiment, the pitch between the light transmitting portions and the pitch between the light shielding portions are 160 μm, and the pitch in the photo-detector 40 is approximately 13.3 μm. An initial storage time (exposure time) value of the photo-detector 40 is 10 μsec, the threshold value of the contrast value is 0.4, and the predetermined time is 1 μsec. The amplitude and the contrast value of the signal waveform (plotted using circles) when the storage time (exposure time) is 10 μsec and the speed is 0 m/s are 1 for normalization.

In Fig. 3, the plot of triangles indicates a signal waveform when the storage time (exposure time) is 10 μsec and the speed is 12 m/s. Here, since the maximum value and the minimum value among the values of the outputs of the light receiving elements are 0.65 and 0.35, respectively, the contrast value is 0.3 from Numerical Expression (1). This contrast value is smaller than the threshold value of 0.4. Therefore, the storage time (exposure time) controlling section 65 changes the storage time (exposure time) to 9 μsec by reducing the storage time (exposure time) by 1 μsec. The plot of squares in Fig. 3 indicates a signal waveform when the storage time (exposure time) is 9 μsec and the speed is 12 m/s. Here, since the maximum value and the minimum value among the values of the outputs of the light receiving elements are 0.63 and 0.27, respectively, the contrast value is 0.4 from Numerical Expression (1). This contrast value is equal to the threshold value of 0.4.

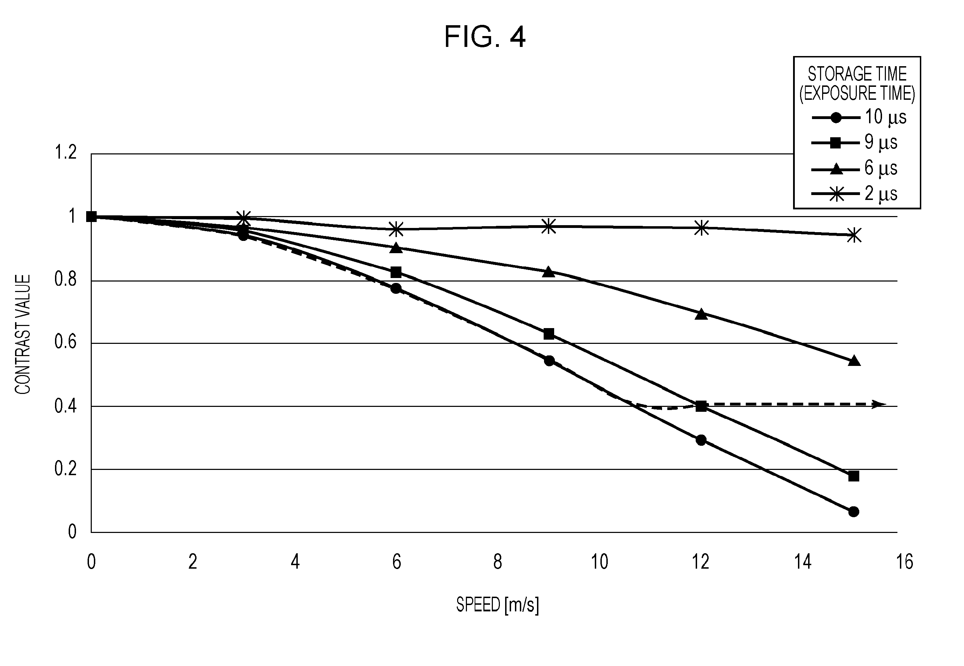

Fig. 4 shows the relationship between the speed of the scale 30 and the contrast value. The horizontal axis in Fig. 4 represents the speed of the scale and the vertical axis represents the contrast value, with plots being made for respective storage times (exposure times). Fig. 4 shows that, if the storage time (exposure time) is reduced, the contrast value is increased. In other words, the calculated contrast value is a value that is related to the speed of the scale 30. Therefore, by appropriately setting the threshold value and the predetermined value (the amount of change of the storage time (exposure time)), it is possible to prevent errors in measurements caused by insufficient contrast even at high speeds.

Further, when the speed is changed from a high speed to a low speed, the storage time (exposure time) controlling section 65 increases the storage time (exposure time) of the photo-detector 40. More specifically, when the contrast value is larger than a threshold value, the storage time (exposure time) controlling section 65 outputs a storage time (exposure time) control signal so that the storage time (exposure time) of the photo-detector 40 is increased by a predetermined time. This threshold value is provided separately from the aforementioned threshold value for reducing the storage time (exposure time), and is stored (set) by being associated with the storage time (exposure time). For example, if the threshold value for a storage time (exposure time) of 9 μsec is 0.6, when the contrast value that has been input with the storage time (exposure time) being 9 μsec becomes greater than 0.6, the storage time (exposure time) is returned to 10 μsec. That is, for each storage time (exposure time), a threshold value (first threshold value) with which a contrast value is compared for reducing the storage time (exposure time) and a threshold value (second threshold value) with which a contrast value is compared for increasing the storage time (exposure time) are stored. The storage time (exposure time) controlling section 65 compares a contrast value with the first threshold value. If the contrast value is smaller than the first threshold value, the storage time (exposure time) controlling section 65 reduces the storage time (exposure time) of the photo-detector 40. In addition, the storage time (exposure time) controlling section 65 compares the contrast value with the second threshold value. If the contrast value is greater than the second threshold value, the storage time (exposure time) controlling section 65 increases the storage time (exposure time) of the photo-detector.

In this way, in the embodiment, the storage time (exposure time) is changed in accordance with the calculated contrast value, and is not set short at all times. The effects of changing the storage time (exposure time) are explained.

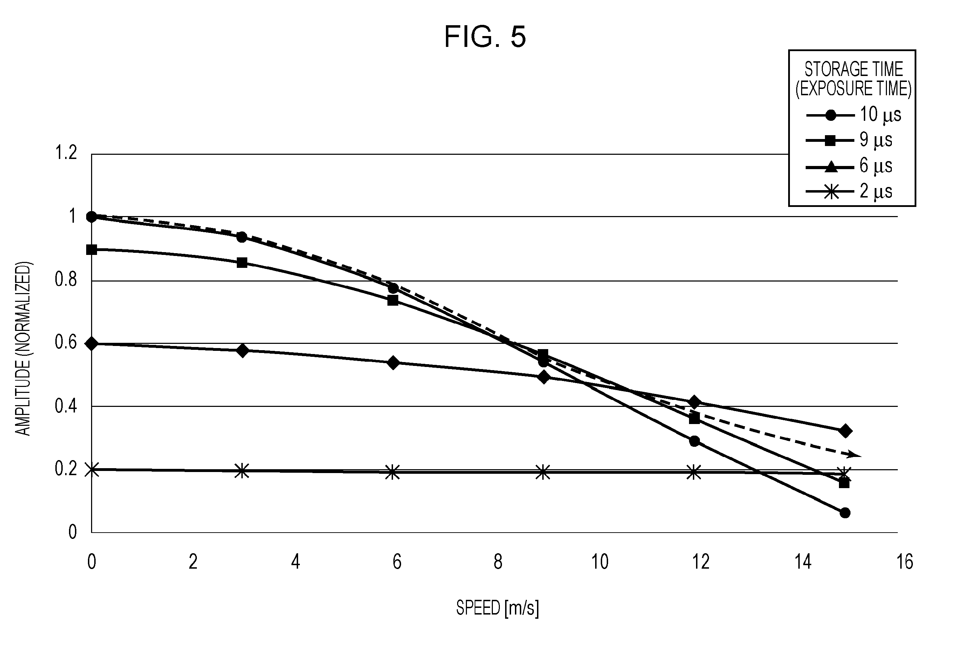

Fig. 5 shows the relationship between the speed of the scale and the amplitude. The horizontal axis in Fig. 5 represents the speed of the scale and the vertical axis in Fig. 5 represents the amplitude. As mentioned above, the amplitude of an output when the storage time (exposure time) is 10 μsec and the moving body (scale) speed is 0 m/s is 1 for normalization. The amplitude is represented by the following Numerical Expression (2):

$$\text{amplitude} = (\text{maximum value} - \text{minimum value})/2 \quad …(2)$$

Fig. 5 shows that, at low speeds, if the storage time (exposure time) is reduced, the amplitude is reduced. In the embodiment, when the storage time (exposure time) is set long at low speeds at which a sufficient contrast value is obtained, it is possible to increase the amplitude at low speeds and to improve the S/N ratio.

As described above, according to the embodiment, it is possible to provide an encoder that is capable of being used at high speeds while suppressing deterioration in measurement precision at low speeds. In addition, since a contrast value that is calculated on the basis of an actually obtained signal waveform is used, it is possible to achieve high reliability.

Second Embodiment

A second embodiment is described. Structural features that correspond to those of the first embodiment are given the same reference numerals and are not described below. An optical encoder according to the second embodiment includes, in addition to the structural components according to the first embodiment, an error determining section 66 that determines whether an error has occurred on the basis of an output signal of a photo-detector 40.

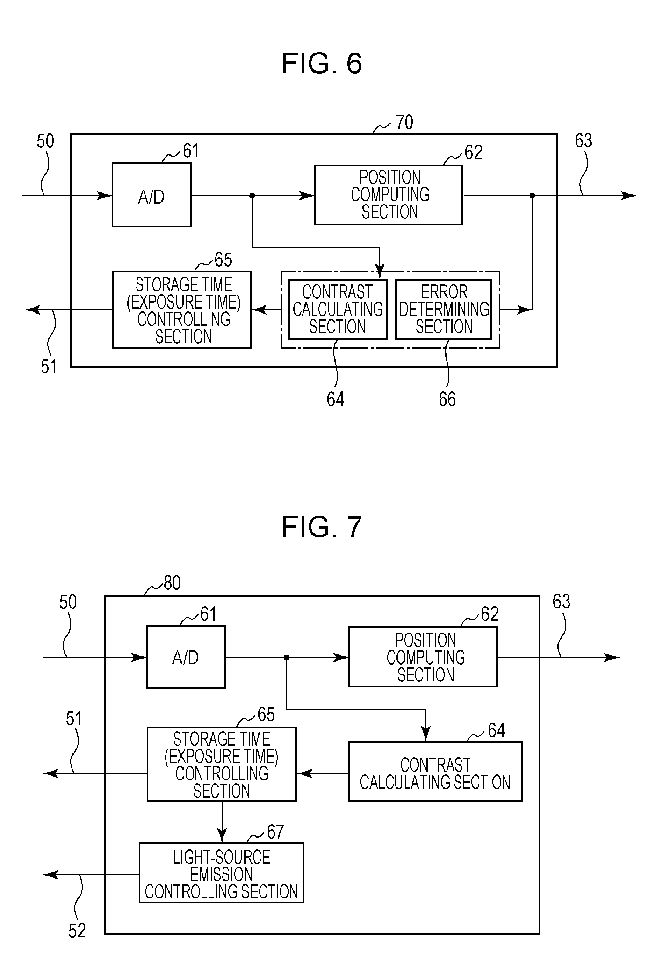

Fig. 6 illustrates a structure of a controller 70 of an encoder according to the second embodiment. In the second embodiment, as described in the first embodiment, a contrast calculating section 64 calculates a contrast value from an input signal waveform. The controller 70 includes the error determining section 66. The error determining section 66 calculates the amplitude of the waveform on the basis of the input signal waveform from Numerical Expression 2, compares the calculated amplitude with the threshold value, and determines whether an error has occurred on the basis of the result of the comparison. The threshold value is previously stored (set) in a memory. When the amplitude is smaller than the threshold value, the error determining section 66 outputs an error signal via a cable 63. Cables other than the cable 63 may be separately provided for outputting an error signal. This allows a user using the encoder to, for example, perform error signaling, perform error display, or stop an apparatus in accordance with the condition of use of the apparatus on which the encoder is mounted. By appropriately setting the threshold value in accordance with the required measurement precision, it is ensured that deterioration in measurement precision caused by a reduction in the amplitude (S/N ratio) does not occur unless an error signal is output. Therefore, it is possible to provide a highly reliable encoder. In addition, since an amplitude calculated on the basis of an actually obtained signal waveform is used, it is possible to provide a particularly highly reliable encoder.

According to the second embodiment, it is possible to provide an encoder that is more reliable than the encoder according to the first embodiment.

Third Embodiment

A third embodiment is described. Structural features that correspond to those of the first embodiment are not described below. An optical encoder according to the third embodiment includes, in addition to the structural components according to the first embodiment, an emission controlling section 67 that controls light emitting means on the basis of an output of a photo-detector 40.

Fig. 7 illustrates a controller 80 of the encoder according to the third embodiment. In the third embodiment, as described in the first embodiment, when an input contrast value is smaller than a threshold value, a storage time (exposure time) controlling section 65 outputs a storage time (exposure time) control signal so that the storage time (exposure time) of the photo-detector 40 is reduced by a predetermined time. In the third embodiment, the controller 80 includes the emission controlling section 67.

In accordance with the changing of the storage time (exposure time) by the storage time (exposure time) controlling section 65, the emission controlling section 67 outputs a light-emission-amount control signal via a cable 52. When the storage time (exposure time) controlling section 65 reduces the storage time (exposure time), the emission controlling section 67 increases the light emission amount of the light emitting diode 10 by a predetermined amount. In contrast, when the storage time (exposure time) controlling section 65 increases the storage time (exposure time), the emission controlling section 67 reduces the light emission amount of the light emitting diode 10 by a predetermined amount. The predetermined amounts are previously stored (set) in a memory. The light-emission-amount control signal is, for example, a pulsed signal having a period. By changing the width of the pulsed signal, it is possible to change the light emission amount of a light emitting section. The light emission amount of the light emitting diode 10 and the amplitude of a signal waveform are proportional to each other. If the light emission amount is doubled, the amplitude can be doubled. Reducing the storage time (exposure time) by the storage time (exposure time) controlling section 65 means that the speed of the scale 30 is high. Accordingly, as shown in Fig. 5, it is assumed that the amplitude is reduced. According to the third embodiment, it is possible to increase the amplitude (S/N ratio) by increasing the light emission amount.

Although, in the third embodiment, the output of the light-emission-amount control signal by the emission controlling section 67 is described with the changing of the storage time (exposure time) being a trigger, the output is not limited thereto. For example, it is possible to calculate the amplitude on the basis of the signal waveform of the photo-detector 40, compare the amplitude and the threshold value with each other, and change the light emission amount in accordance with the result of the comparison. According to the third embodiment, since it is possible to prevent the deterioration of the measurement precision caused by a reduction in the amplitude (S/N ratio), it is possible to provide an encoder that is more reliable than the encoder according to the first embodiment.

Fourth Embodiment

A fourth embodiment of the present invention is described. An optical encoder according to the fourth embodiment differs from the optical encoder according to the first embodiment in that a controller 90 includes a speed calculating section 68 and in that a storage time (exposure time) controlling section 65 controls a storage time (exposure time) on the basis of speed instead of a contrast value. Structural features that correspond to those of the first embodiment are not described below.

As shown in Fig. 4, as the speed of an object to be measured is increased, the contrast value of a signal waveform is reduced. It is possible to suppress a reduction in the contrast value by calculating the speed of a scale 30 on the basis of an output signal of a photo-detector 40 and controlling a storage time (exposure time) on the basis of the calculation result.

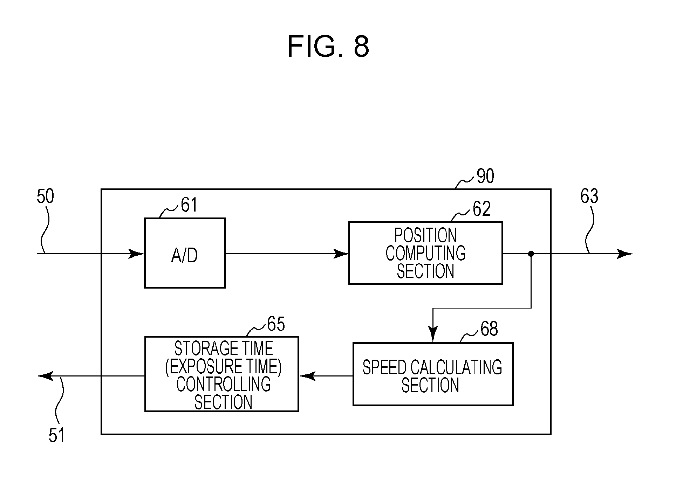

Fig. 8 illustrates the controller 90 according to the fourth embodiment. The controller 90 includes the speed calculating section 68 that calculates the speed of the scale 30 on the basis of an output of a position calculating section 62. The method of calculating the speed from a position may be, for example, an existing differential method. The speed calculating section 68 outputs a signal that is related to the calculated speed to the storage time (exposure time) controlling section 65.

When the speed is less than a threshold value, the storage time (exposure time) controlling section 65 outputs a storage time (exposure time) control signal so that the storage time (exposure time) of the photo-detector 40 is reduced by a predetermined time. The threshold value and the predetermined time are previously stored (set) in a memory. As an example, when the initial storage time (exposure time) value is 10 μsec, if the calculated speed exceeds 10.5 m/s, the storage time (exposure time) is changed to 9 μsec. In contrast, when the speed becomes less than 10.5 m/s with the storage time (exposure time) being 9 μsec, the storage time (exposure time) is changed to 10 μsec.

According to the fourth embodiment, as in the first embodiment, by appropriately setting the threshold value and the predetermined value (amount of change in the storage time (exposure time)), it is possible to prevent measurement error caused by insufficient contrast even at high speeds. As shown in Fig. 5, when the storage time (exposure time) is set long at low speeds at which a sufficient contrast value is obtained, it is possible to increase the amplitude (the S/N ratio) at low speeds.

As mentioned above, according to the fourth embodiment, it is possible to provide an encoder that is capable of being used at high speeds while suppressing deterioration in measurement precision at low speeds. In addition, since a contrast value that is calculated on the basis of an actually obtained signal waveform is used, it is possible to achieve high reliability.

It is also possible to combine the fourth embodiment with the second embodiment or the third embodiment.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

**1.** An optical encoder comprising:

light emitting means (10);
a scale (30) that is irradiated with light from the light emitting means (10);
a photo-detector (40) that receives the light from the scale (30) and that obtains an output signal;
computing means (62) arranged to compute a position or a rotational angle of an object to be measured on the basis of the output signal; and
exposure time controlling means (65) arranged to control an exposure time of the photo-detector (40) on the basis of the output signal of the photo-detector (40).

**2.** An optical encoder according to Claim 1, wherein the exposure time controlling means (65) is configured to compare a value that is related to a speed of the object to be measured and a preset threshold value and to change the exposure time in accordance with a result of the comparison, the value that is related to the speed of the object to be measured being calculated on the basis of the output signal.

**3.** An optical encoder according to Claim 2, wherein the exposure time controlling means (65) is configured to change the exposure time so that the exposure time is reduced as the speed of the object to be measured is increased.

**4.** An optical encoder according to Claim 1, further comprising contrast calculating means (64) arranged to calculate a contrast value of the output signal of the photo-detector (40) on the basis of the output signal of the photo-detector (40),
wherein the exposure time controlling means (65) is configured to control the exposure time of the photo-detector (40) on the basis of the contrast value calculated by the contrast calculating means (64).

**5.** An optical encoder according to Claim 4, wherein the exposure time controlling means (65) is configured to compare the contrast value calculated by the contrast calculating means (64) and a threshold value and to reduce the exposure time of the photo-detector (40) in a case that the contrast value is smaller than the threshold value.

6.  An optical encoder according to Claim 5, wherein a first threshold value for reducing the exposure time and a second threshold value for increasing the exposure time are preset with each exposure time, and
    wherein the exposure time controlling means (65) is configured to compare the contrast value calculated by the contrast calculating means (64) and the first threshold value and to reduce the exposure time of the photo-detector (40) in a case that the contrast value is smaller than the first threshold value, to compare the contrast value calculated by the contrast calculating means (64) and the second threshold value and to increase the exposure time of the photo-detector (40) in a case that the contrast value is larger than the second threshold value.

7.  An optical encoder according to Claim 1, further comprising speed calculating means (68) arranged to calculate a speed of the object to be measured on the basis of the output signal of the photo-detector (40),
    wherein the exposure time controlling means (65) is configured to control the exposure time of the photo-detector (40) on the basis of the speed calculated by the speed calculating means (68).

8.  An optical encoder according to Claim 7, wherein the exposure time controlling means (65) is configured to compare the speed calculated by the speed calculating means (68) and a threshold value and to reduce the exposure time of the photo-detector (40) in a case that the speed is greater than the threshold value.

9.  An optical encoder according to any one of Claims 1 to 8, wherein an amplitude of the output signal is calculated on the basis of the output signal of the photo-detector (40) and an error signal is output on the basis of the calculated amplitude.

10. An optical encoder according to any one of Claims 1 to 9, further comprising emission controlling means (67) arranged to control a light emission amount of the light emitting means (10) on the basis of the output signal of the photo-detector (40) or in accordance with the controlling by the exposure time controlling means (65).

# FIG. 1

100

# FIG. 2

FIG. 3

STORAGE TIME 10 μs ; SPEED 0 m/s (EXPOSURE TIME)

STORAGE TIME 10 μs ; SPEED 12 m/s (EXPOSURE TIME)

STORAGE TIME 9 μs ; SPEED 12 m/s (EXPOSURE TIME)

OUTPUT

ELEMENT POSITION X [μm]

FIG. 4

FIG. 5

EP 2 733 470 A2

# FIG. 6

# FIG. 7

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002303538 A